(19) **Europäisches Patentamt / European Patent Office / Office européen des brevets**

(11) **EP 4 147 577 A1**

(12) # EUROPEAN PATENT APPLICATION

(43) Date of publication:
**15.03.2023 Bulletin 2023/11**

(21) Application number: **22382784.1**

(22) Date of filing: **15.08.2022**

(51) International Patent Classification (IPC):
**A01N 65/40** (2009.01)    **A01P 3/00** (2006.01)
**A01N 25/28** (2006.01)

(52) Cooperative Patent Classification (CPC):
(C-Sets available)
**A01P 3/00; A01N 65/40**      (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.09.2021 ES 202130849**

(71) Applicant: **Cereales Candelo SL**
**02080 Albacete (ES)**

(72) Inventors:
- **NIZA GONZÁLEZ, ENRIQUE**
  **02005 ALBACETE (ES)**
- **RUBIO MORAGA, ANGELA**
  **02003 ALBACETE (ES)**
- **AHRAZEM EL KADIRI, OUSSAMA**
  **02006 ALBACETE (ES)**
- **GOMEZ GOMEZ, LOURDES**
  **02003 ALBACETE (ES)**
- **MARTÍNEZ LUJÁN, ANTONIO**
  **02001 ALBACETE (ES)**
- **GOMEZ LOPEZ, PILAR**
  **02005 ALBACETE (ES)**

(74) Representative: **Aguilar Catalán, Blanca**
**Calle Madre Rafols 2, Planta 4**
**Oficina 8**
**Edificio Aida**
**50004 Zaragoza (ES)**

(54) **CHITOSAN NANOPARTICLES CONTAINING ENCAPSULATED GARLIC ESSENTIAL OIL (ALLIUM SATIVUM L.) AND USE THEREOF**

(57) The invention provides chitosan nanoparticles in which the garlic essential oil is encapsulated, the nanoparticles being regularly distributed and spherical in form with a particle size in the range of 200-400 nm. The nanoparticles of the invention exhibit antifungal activity, especially against *Aspergillus* and *Fusarium,* and have eliciting and plant growth promoting effects.

Figure 1

GEO FT-IR, NPCH AND GEO-NPCH

**(Cont. next page)**

EP 4 147 577 A1

**EP 4 147 577 A1**

(52) Cooperative Patent Classification (CPC): (Cont.)

C-Sets
**A01N 65/40, A01N 25/28**

**2**

**Description**

This invention refers to chitosan nanoparticles containing encapsulated garlic essential oil and the use thereof, with these nanoparticles being used in the phytosanitary industry for their antifungal/antimicrobial activity and their promotion of the proper defence of plants against attack by fungi or microbes.

More specifically, firstly, the invention provides chitosan nanoparticles in which the garlic essential oil (*Allium sativum L.*) is encapsulated, the nanoparticles being regularly distributed and spherical in form with a particle size in the range of 200-400 nm. The nanoparticles of the invention exhibit antifungal activity, especially against *Aspergillus* and *Fusarium,* and have eliciting and plant growth-promoting effects.

Secondly, the invention refers to the use of these nanoparticles as antifungals in plants.

Diseases caused by soil pathogenic fungi are the cause of serious losses in agricultural production and a threat to food safety. Antifungal agents have contributed greatly to the protection of agricultural crops, leading to increased agricultural productivity. However, global population growth, global warming and increased resistance to fungi pose new challenges for the agricultural sector. Recently, the European Commission (EC) announced the reduction of pesticide use by 50% by the year 2030 through two framework strategies that will converge in parallel with the green deal, leading to the need to use new ecological and efficient pesticides, which include antifungals.

The report of 20 May 2020 on the implementation of the Directive on the sustainable use of pesticides showed that, although Member States have made progress in implementing the Directive, less than one-third have completed the review of their national action plans within the legal period of five years and, of those who have reviewed them, most have not remedied the deficiencies identified by the Commission in the initial national action plans.

Within the framework of the European Green Deal and, in particular, its 'Farm to Fork' and Biodiversity strategies, the Commission will adopt measures to reduce the use and risk of chemical pesticides by 50% by 2030, in particular the use of the most dangerous pesticides. To this end, the Commission will review the Directive on the sustainable use of pesticides and promote greater use of alternative forms to protect crops from pests and diseases.

Various types of antifungal agents are used in agriculture for pre- and post-harvest treatment, such as methylbenzimidazole carbamates (MBC), succinate dehydrogenase inhibitors (SDHI), anilinopyrimidines (AP), Qo inhibitors (QoI), morpholine and azoles (Brauer et al., 2019, Antifungals in agriculture: Friends and foes of public health. Biomolecules, 9(10), 1-21, https://doi.org/10.3390/biom9100521). Currently, triazoles are the most commonly used antifungals due to their high efficiency and broad-spectrum activity. Within this family, Tebuconazole (TB) is an effective systemic fungicide that has been widely used in both the agricultural and medical sectors for the control of fungal diseases and is the main antifungal currently used as a seed coating agent in numerous cereals (Marin et al., 2013, Potential effects of environmental conditions on the efficiency of the antifungal tebuconazole controlling Fusarium verticillioides and Fusarium proliferatum growth rate and fumonisin biosynthesis. International Journal of Food Microbiology, 165(3), 251-258).

However, the extensive use of tebuconazole and other triazoles in agriculture has raised concerns about their environmental impacts, as well as the risks arising from their toxicological effects and the emergence of antifungal-resistant strains of pathogenic fungi (Brauer, 2019, *supra*). TB has been shown to induce cardiovascular toxicity in adult male rats and hepatotoxicity in various species such as zebrafish and fruit bats. In addition, the presence of this triazole in ecosystems has been linked to endocrine disruption of certain animal species in several reports (Ma F et al., 2020; Li S et al., 2019 Environ Pollut; Lopez-Antia A et al., 2020 Environ Pollut). In addition, it has been suggested that the use of triazoles in agriculture will promote the emergence of strains resistant to antifungals that lead to human disease. In this context, it has been reported that the widespread use of TB as coating agents in seed planting involves direct risks for birds on farmland in certain ecosystems (Lopez-Antia A, Ortiz-Santaliestra ME, Mougeot F, Camarero PR, Mateo R. Birds feeding on tebuconazole treated seeds have reduced breeding output. Environ Pollut. 2021 Feb 15;271:116292. doi: 10.1016/j.envpol.2020.116292. EPUB 2020 Dec 17. PMID: 33388683.).

In these circumstances, it would be interesting to develop alternative strategies to the treatment of TB, combining environmentally friendly compounds with antifungal activity, as well as inducers that improve the plant's own defences against fungal attack.

In this context, essential oils (EO) and terpenes are used as antifungal agents, antimicrobials and natural antioxidants (D'agostino et al., 2019, Essential oils and their natural active compounds presenting antifungal properties. Molecules, 24(20); (Valdivieso-Ugarte et al., 2019, Antimicrobial, antioxidant, and immunomodulatory properties of essential oils: A systematic review. Nutrients, 11(11), 1-29; Mahizan et al., 2019 Terpene derivatives as a potential agent against antimicrobial resistance (AMR) pathogens. Molecules, 24(14), 1-21. Among these compounds, the essential oil *Allium sativum* L. is composed mainly of allyl disulfide, allyl trisulfide, allyl(E)-1-propenyl disulfide, allyl methyl trisulfide and diallyl tetrasulfide (Thuy et al., 2020, Investigation into SARS-CoV-2 Resistance of Compounds in Garlic Essential Oil. ACS Omega, 5(14), 8312-8320), and showed antibacterial and antifungal properties against *Staphylococcus aureus, Salmonella enteritidis, Listeria monocytogenes, Aspergillus niger, Penicillium cyclopium* and *Fusarium oxysporum* among others (Benkeblia, 2004), Antimicrobial activity of essential oil extracts of various onions (Allium cepa) and garlic (Allium sativum). LWT - Food Science and Technology, 37(2), 263-268; Somrani et al., 2020, Garlic, onion, and cinnamon essential oil anti-biofilms' effect against Listeria monocytogenes. Foods, 9(5), 1-12). Despite their promising properties, applications of essential oils and terpenes continue to be hampered by their high volatility, low solubility in water and instability in light and oxygen (Niza et al., 2020, PEI-coated PLA nanoparticles to enhance the antimicrobial activity of carvacrol. Food Chemistry, 328).

Encapsulation of these bioactive compounds is an effective method to protect them from degradation in adverse environmental conditions. In addition, encapsulation can be used not only to improve the useful life of essential oils but also to control release systems (Vahedikia et al., 2019, Colloids and Surfaces B: Biointerfaces Biodegradable zein film composites reinforced with chitosan nanoparticles and cinnamon essential oil: Physical, mechanical, structural and antimicrobial attributes. Colloids and Surfaces B: Biointerfaces, 177(December 2018), 25-32), therefore, by maintaining the antimicrobial bioactivity of unstable compounds, improving their solubility in water and bioavailability of lipophilic compounds (Hasheminejad et al., 2019, Improving the antifungal activity of clove essential oil encapsulated by chitosan nanoparticles. Food Chemistry, 275 (August 2018), 113-122). Various building materials have been tested such as poly-l-lactide (Niza et al., 2020, *supra*) and different types of nano-formulations such as liposomes (Sebaaly et al., 2015, Preparation and characterization of clove essential oil-loaded liposomes. FOOD CHEMISTRY, 178, 52-62), nano-emulsions (Noori et al., 2018, Antimicrobial and antioxidant efficiency of nanoemulsion-based edible coating containing ginger (Zingiber officinale) essential oil and its effect on safety and quality attributes of chicken breast fillets. Food Control, 84, 312-320) and solid lipid nanoparticles, among others, to convey terpenes and various essential oils (Bazzaz et al., 2018, Solid lipid nanoparticles carrying Eugenia caryophyllata essential oil: the novel nanoparticulate systems with broad-spectrum antimicrobial activity. Letters in Applied Microbiology, 66, 506-513) to improve their antimicrobial properties.

However, chitosan is a linear copolymer composed of D-glucosamine and N-acetyl-D-glucosamine units bonded in β-(1-4) and it is attracting interest as a promising raw material in the pharmaceutical, medical and agricultural industries in plant disease control applications (Hosseinnejad & Mahdi, 2016, International Journal of Biological Macromolecules Evaluation of different factors affecting antimicrobial properties of chitosan. International Journal of Biological Macromolecules, 85, 467-475).

It is widely used in crop control and agriculture to control plant diseases and has been shown to be toxic to a wide range of fungi, inhibiting both growth and development (Muzzarelli et al., 2001, International Journal of Biological Macromolecules Evaluation of different factors affecting antimicrobial properties of chitosan. International Journal of Biological Macromolecules, 85,467-475). In addition, chitosan-derived oligosaccharides have been described as inducers that lead to a variety of defence responses in host plants against microbial infections, including accumulation of phytoalexins, pathogen-related proteins (PR) and proteinase inhibitors, lignin synthesis, and callose formation (Hadrami et al. 2010, Chitosan in Plant Protection. Marine Drugs, 8, 968-987). In addition, chitosan has been applied as a foliar treatment agent (Bittelli et al., 2001, Reduction of transpiration through foliar application of chitosan. Agricultural and Forest Metereology, 107, 167-175), as a soil improver (Rabea et al., 2003, Chitosan as Antimicrobial Agent: Applications and Mode of Action. Biomacromolecules, 4(6), 1457-1465) and as a seed-coating agent (Kananont et al., 2010, Scientia Horticulturae Chitosan specificity for the in vitro seed germination of two Dendrobium orchids (Asparagales: Orchidaceae). Scientia Horticultae, 124(2), 239-247). In addition, this cationic polysaccharide has enormous potential applications in nanotechnology, due to its easy and controllable extraction, biocompatibility, biodegradability, non-toxicity, antimicrobial properties, easy chemical modification and also its ability to form gels, films and solid nanoparticles (Keawchaoon and Yoksan, 2011, Colloids and Surfaces B: Biointerfaces Preparation, characterization and in vitro release study of carvacrol-loaded chitosan nanoparticles. Colloids and Surfaces B: Biointerfaces, 84(1), 163-171; Hu and Luo, 2016, Polyphenol-chitosan conjugates: Synthesis, characterization, and applications. Carbohydrate Polymers, 151, 624-639).

Different encapsulation techniques have been applied to protect essential oils and terpenes, including the method of ionic gelation via a non-toxic, multivalent material such as Tripolyphosphate (TPP) (Hadidi et al., 2020, Chitosan nanoparticles loaded with clove essential oil: Characterization, antioxidant and antibacterial activities. Carbohydrate Polymers, 236(February), 116075) for encapsulating oregano essential oil, eugenol, carvacrol, *mentha spicata* essential oil, clove, *Satureja hortensis L.,* among others (Fakhreddin et al., 2013, Two-step method for encapsulation of oregano essential oil in chitosan nanoparticles: Preparation, characterization and in vitro release study. Carbohydrate Polymers, 95(1), 50-56; Woranuch & Yoksan, 2013, Eugenol-loaded chitosan nanoparticles: I. Thermal stability improvement of eugenol through encapsulation. Carbohydrate Polymers, 96(2), 578-585; Keawchaoon & Yoksan, 2011, *supra*). Various chitosan formulation methods to form CH nanoparticles (NPCH) showed promising activities in promoting seed germination and seedling growth in wheat, tomatoes and other plant species (Li et al., 2019, *supra*; Chun & Chandrasekaran, 2019, Chitosan and chitosan nanoparticles induced expression of pathogenesis-related proteins genes enhances biotic stress tolerance in tomato. International Journal of Biological Macromolecules, 125, 948-954).

A biological pesticide formulation against an entomopathogenic nematode is described in EP1332676B1, "Biological pesticide based on chitosan and entomopathogenic nematodes". Chitosan was used with a viscosity between 150 and 450 cps and a degree of deacetylation between 50-99%, at a concentration between 0.08 and 0.18% and a weak acid at a concentration of 1 to 10% (v/v), adjusting the pH of this formulation in a range of 4-7.

CN103626598B, "Functional chitosan biological slow-release fertilizer and preparation method thereof", describes a slow-release functional chitosan biological fertilizer comprising a coating layer of biodegradable chitosan, polyvinyl alcohol, butyric aldehyde, starch, di-n-hexyl adipate, and distilled water.

According to the first point, the invention provides chitosan nanoparticles in which essential garlic oil (Allium sativum L.) is encapsulated, the nanoparticles having a regular distribution and spherical shape with a particle size in the range of 200-400 nm, the nanoparticles having improved stability, antifungal activity, especially against *Aspergillus versicolor, A. niger* and *Fusarium oxysporum,* and with eliciting and plant growth-promoting effects, constituting an ecological alternative to the use of tebuconazole.

In one embodiment, the chitosan mentioned is a low molecular weight chitosan of 50-190 kDa, with a degree of deacetylation of 75-85%.

In another embodiment, the ratio chitosan:essential garlic oil present in the nanoparticles is in the range of 1:0.25 to 1:1. Preferably, this ratio is in the range of 1:0.25 to 1:0.75.

The process of producing chitosan nanoparticles containing encapsulated garlic essential oil can be carried out by encapsulating the garlic essential oil into chitosan nanoparticles according to the following steps:

i) Obtaining an oil-in-water emulsion from a 0.2% chitosan solution in 1% acetic acid, with agitation, and sonication until complete dissolution, the addition of essential garlic oil together with an emulsifier, such as polysorbate, and emulsification at 1,000 for 10 minutes;

ii) Addition of a 0.2% sodium tripolyphosphate solution drop by drop at a rate of 2 ml/min under continuous agitation to induce ionic gelation.

According to the second point of the invention, it refers to the use of the nanoparticles described above as an antifungal active substance in plants and/or as an elicitor to improve the resistance of plants to fungal attack.

In this context, diseases affecting cereals of economic importance include *Blumeria graminis, Puccina recondita, Puccinia graminis, Puccina Striiformis, Septoria tritici* and *Septoria nodorum,* as well as *Fusarium.*

Thus, fusarium head blight is the most significant disease affecting this crop. Fungi of the genus Fusarium, in addition to the fusarium head blight, can also cause other diseases: wilting seedlings, root rot or take-all of wheat. In addition to the various cereal diseases caused by the fungi mentioned, other fungi cause grain losses during storage and after harvest. A recent study showed that cereal grains were infested to varying degrees with storage fungi. A total of 21 different fungi were isolated, namely, *Alternaria alternata, Penicillium sp, Aspergillus niger, A. flavus, Curvularia lunata, Rhizopus stolonifer, Fusarium oxysporum* and *Mucus. Aspergillus* was the most frequently isolated fungus followed by *Aspergillus niger A. flavus. Aspergillus fumigatus, Aspergillus parasiticus, Aspergillus ochraceus* were equally common in grains (Varsha bhalerao & Ashok chavan, 2008, Isolation of filamentous fungi in post-harvest cereal grain during the storage and their effect in seed health. International Journal of Advanced Research, 5(8), 2171-2177). The most widely used method against cereal pathogens is protection through the use of fungicides. However, it has been observed that pathogens are developing resistance to the different fungicides used to protect plants. The use of phytosanitary chemicals is also associated with environmental pollution, leaving residues of active substances in soil and grains.

The fungicidal and fungistatic activities of essential oils, together with knowledge about their traditional and new uses and growing literature on their mechanisms of action, make them an attractive alternative to synthetic fungicides. The success of the use of essential oil as a fungicide is probably because many compounds act synergistically, making them more effective against plant pathogenic fungi.

As shown in the examples, chitosan nanoparticles containing encapsulated garlic essential oil increase the fungicidal capacity of garlic essential oil. This activity is similar to that of tebuconazole, with the advantage that the nanoparticles of the invention are not harmful and, because of their natural origin, they will be better accepted by consumers than synthetic agents. In addition, essential oils and plant extracts in general degrade faster than most chemical fungicides, are environmentally friendly, and are less likely to kill beneficial fungi than synthetic fungicides, with greater environmental retention.

In one embodiment, the use of the invention's chitosan nanoparticles containing essential garlic oil encapsulated inside is carried out by coating the seeds to be treated with a solution of the nanoparticles of the invention at a concentration of 2.0-2.5 g/l, for example, spraying seeds.

Figure 1 shows FT-IR spectroscopy data from GEO (garlic essential oil), NPCH (chitosan nanoparticles) and GEO-NPCH (chitosan nanoparticles with encapsulated garlic essential oil) for determining the chemical structure of the nanoparticles of the invention.

Figure 2 shows thermal gravimetric/differential scanning calorimetry (TGA/DSC) analyses of garlic essential oil (GEO).

Figure 3 shows thermogravimetric analyses (TGA) of NPCH and GEO-NPCH.

Figure 4 shows the differential scanning calorimetry (DSC) analyses of NPCH and GEO-NPCH.

Figure 5 shows the X-ray diffraction (XRD) diagram of chitosan powder, NPCH and GEO-NPCH.

Figure 6 shows data on the characteristics of plants treated with different treatments at different doses: A) total weight, B) root length, C) leaf length and D) stem length.

## Examples

*1. Materials and Methods*

In the following examples and trials, a low molecular weight chitosan (50-190 kDa) was used with 75-85% deacetylation, tripolyphosphate (TPP), 3-(4.5-dimethylthiazol-2-yl)-2-bromide of 5-diphenyltetrazolium (MTT), tebuconazole (TB) and all solvents were supplied by Sigma-Aldrich (Spain). Nufarm Spain's Orius 20 EW (20% Tebuconazole) and Garlic Essential Oil (GEO) were purchased from Pranarom. The organisms used for the antifungal assay were species of *Aspergillus versicolor, A. niger* y *Fusarium oxysporum* that were isolated from the soil and examined visually and microscopically for morphological characteristics of the isolates as described in Palmero et al. (2014, Pathogenicity and genetic diversity of Fusarium oxysporum isolates from corms of Crocus sativus. Industrial Crops & Products, 61, 186-192) and were confirmed by polymerase chain reaction (PCR) techniques using ITS primers as described in Gardes et al. (1993, ITS primers with enhanced specificity for basidiomycetes - application to the identification of mycorrhizae and rusts. Molecular Ecology, 113-118).

*2. Preparation of chitosan nanoparticles with and without encapsulated garlic essential oil*

The encapsulation of GEO in chitosan nanoparticles (GEO-NPCH) was formulated in a two-step process: First, primary oil-in-water (o/w) emulsification, followed by the ion gelation method described by Keawchaoon & Yoksan (2011, Colloids and Surfaces B: Biointerfaces Preparation, characterization and in vitro release study of carvacrol-loaded chitosan nanoparticles. Colloids and Surfaces B: Biointerfaces, 84(1), 163-171) with some modifications. Briefly, a 0.2% CH solution was prepared by dissolving CH in 1% acetic acid with continuous stirring overnight. The CH solution was then sonicated for 10 minutes until it was completely dissolved. A 50 ml CH solution at 1,000 RPM was mixed into a 1% Tween 80 solution, then different proportions of CH:GEO (1:0, 1:0.25, 1:0.5, 1:0.75, and 1:1) were emulsified at 1,000 RPM for 10 min. A 0.2% TPP solution was added drop by drop at 2 mL/min with continuous agitation to induce ionic gelation. The agitation was carried out continuously at 700 RPM for 40 min. The nanoparticles were collected after centrifuging at 15,000 RPM for 20 min at 4°°C and then washed several times with mQ water. The nanoparticle suspension was frozen at -80°C and lyophilised for 48 h at -50°C (LyoQuest-85 / 208V 60 Hz, Teslar).

*3. Determination of encapsulation efficiency and loading efficiency of nanoparticles of garlic-chitosan essential oil (GEO-NPCH)*

A sample suspension (100 $\mu$l) was mixed with 5 ml of HCl 2M and boiled at 95°C to reflux. After cooling, 1 ml of absolute ethanol was added to the homogeneous mixture before centrifuging at 9,000 rpm for 1 min at 25°C. The supernatant was analysed by UV-vis spectrophotometry over a wavelength range of 250-400 nm, covering the maximum absorption wavelength of garlic essential oil (325 nm). Chitosan nanoparticles without GEO (NPCH) were also prepared as a control in the same manner. The loading capacity (LC) and encapsulation efficiency (EE) of GEO were calculated according to the following equations:

$$\% \, LC = \frac{weight \; of \; encapsulated \; GEO \; (mg)}{total \; weight \; of \; GEO - NPCH \; (mg)} \; x \; 100$$

$$\% \, EE = \frac{weight \; of \; encapsulated \; GEO \; (mg)}{weight \; of \; GEO \; supplied \; (mg)} \; x \; 100$$

*4. Instrumental characterisation of nanoparticles*

Particle characterisation of nano-formulations (size, zeta potential and polydispersity index (PDI)) was determined by dynamic light scattering (DLS) using a Zetasizer (3000HSM Malvern Ltd, IESMAT, Spain). Specifications: Chitosan refractive index (RI) of 1,700, absorption index of 0.010, and RI water solvent: 1.33, with a viscosity of 0.8872 cP, the number of measurements was performed 3 times. IR spectra were recorded on an FT-IR spectrophotometer equipped with an ATR accessory and the main peaks were expressed in $cm^{-1}$. Thermal decomposition mechanisms were determined using a thermogravimetric analyser (TGA Q20, TA Instruments) equipped with a standard platinum tray. The differential scanning calorimetry (DSC) experiments were conducted using a DSC Q50 system (TA Instruments) equipped with a standard aluminium tray. An indium sample was used as a reference. In all cases, samples of approximately 3 mg were heated at a rate of $10°C$ $min^{-1}$ in a nitrogen atmosphere. The X-ray diffraction (XRD) patterns of the samples were scanned in a $2\theta$ range of 5 to 60° using an X-R diffractometer with a velocity angle of 0.05°/min. A differential scanning calorimetry (DSC) analysis was performed to find out the thermal stability of pure GEO, NPCH and GEO-NPCH using a DSC (PATATIN MODEL) with a rising heat rate of 10°C/min (30-320°C). The morphological surface and shape analysis of NPCH and GEO-NPCH were studied using scanning electron microscopy, SEM. The samples were sprayed with Pt and observed with a Jeol 7800 F electron microscope at 20 KV.

*5. Determination of antifungal activity*

Various proportions of CH:GEO were evaluated (1:0, 1:0.25, 1:0.5, and 1:0.75). For the antifungal analysis, the GEO-NPCH ratio 1:0.75 was chosen for the assay, as this combination resulted in PDI < 0.7 and LC greater than ratios 1:0.5 and 1:0.25. The antifungal assay with spores of *A. versicolor, A. niger* and *F. oxysporum* was carried out according to Rubio-Moraga et al. (2014, Pathogenicity and genetic diversity of Fusarium oxysporum isolates from corms of Crocus sativus. Industrial Crops & Products, 61, 186-192) with some modifications. The treatments were prepared in a sterile Eppendorf tube containing 3,000 spores (40 μl) of each fungus in sterile PDB and 20 μl of the different treatments. The mixture was added to a drilled hole using a Pasteur pipette in the centre of the PDA agar plates. All plates were incubated at 28°C for 6 days to evaluate the antifungal index (%) = ((CT)/C) x 100, and the minimum inhibitory concentrations (MIC) of each treatment, where C and T are radial growth (mm) of control and treated plates of the different fungi. For the antifungal test after spore germination, a spore suspension at a concentration of $5 \times 10^3$ spores/ml (100 μl) was transferred to a 96-well microtiter plate. The plates were incubated for 24 hours at 28°C and treatments were added using the serial dilution method with a dilution factor of 1/3. The plates were incubated for another 24 hours at room temperature and all plates were treated with 10 μl of 3-(4.5-dimethylthiazol-2-yl)-2,5,-diphenyltetrazolium bromide (MTT; 5 mg/ml in PBS; Sigma). The plates were incubated overnight at room temperature, followed by the addition of 100 μl of MTT solvent (0.1 NHCl in anhydrous isopropyl alcohol).

*6. Evaluation of GEO-chitosan nanoparticles as a seed-coating agent*

To evaluate the germination rate of the different seed coatings, three lots of 30 grams of wheat (*Triticum vulgare*), oats (*Avena sativa*) and barley seed (*Hordeum vulgare*) were coated with 3.5 ml of each treatment. 30 grams of untreated seeds, 30 grams of seeds treated with NPCH and GEO-NPCH at 2.5 mg/ml and 30 grams of seeds treated with tebuconazole at commercial doses (9 mg/ml of pure tebuconazole) were used. After coating, the seeds were dried at room temperature. Batches of 100 seeds of each cereal were placed on wet filter paper and incubated at 25°C for 5-7 days in a germination chamber at 21.8°C, with 8 hours of light and 16 hours of dark. The effect on seed germination was evaluated by counting the number of surviving seeds. The experiment was conducted in triplicate. To evaluate morphological effects in plants, batches of 100 grams of wheat seeds with NPCH and GEO-NPCH material were treated at different concentrations (7 mg/ml, 2 mg/ml and 1 mg/ml). The effect was compared to the concentration recommended by the manufacturer TB (45 mg/ml of product with 9 mg/ml of pure TB). Each treatment was tested under field conditions. The seeds were cultivated, dividing 10 $m^2$ of the growing area into 6 microplots for each treatment. A batch of 10 seeds was collected for each treatment 15 days after planting. Seeds were evaluated by measuring weight, root length and blade length in mm. Three to five biological replicates were analysed with three technical replicates for biological replicates. Data obtained was statistically analysed by the Tukey method using GraphPad Prism statistical software version 5.0.0 for Windows, GraphPad Software, San Diego, California, USA. Differences were tested at < 0.05 (95% probability level).

*7. Size and surface charge of GEO-chitosan nanoparticles*

To improve the stability and efficiency of GEO encapsulation, GEO-chitosan nanoparticles were obtained as described in materials and methods, using different formulations of CH:GEO ratios from 1:0 to 1:1. To determine the NP size, the Z potential and polydispersity index (PDI) of each ratio formula, the DLS technique was applied. The results, shown in Table 1, indicated that the NP varies from 172 to 352 nm in diameter, the size of these NP grew as the amount of GEO increased, a behaviour that has been described previously in other essential oils. The PDI showed the same pattern compared to the NP size pattern, the PDI rate of the NP increased as the amount of GEO increased from 0.4 in 1:0.25 to 0.7 in 1:1, confirming that formulations, except for the 1:1 ratio, are monodispersed and stable. In turn, the CH:GEO 1:1 ratio formula showed a PDI value > 0.7, demonstrating a very large particle size distribution. All the formulations tested had a positive surface charge with a range of +19.8 to +49.8 mV, which is in line with previous studies on chitosan NP that encapsulate different active molecules. These positive charges arise from the protonation of amino groups. The positive surface charge decreases with the increase in the encapsulated amount of GEO in NP due to the interaction of GEO with NP, resulting in changes in structure and charge. In addition, the Z-potential results confirm that NPCH and GEO-NPCH 1:0.25, 1:0.5, and 1:0.75 have high stability, as shown in Table 1, while the 1:1 CH:GEO ratio has a more unstable formulation (+ 19.8 mV), which matches the PDI value.

Table 1

| Formulation | Average size (d, nm)* | PDI* | Z potential* (mV) | %EE | %LC |
|---|---|---|---|---|---|
| NPCH | 172.3±0.71 | 0.42±0.01 | +49.8±0.75 | - | - |
| GEO-NPCH 1:0.25 | 186.9±0.99 | 0.46±0.02 | +32.6±0.6 | 32.8 | 5.2 |
| GEO-NPCH 1:0.5 | 194.1±4.37 | 0.44±0.01 | +31.2±0.57 | 27.8 | 8.7 |
| GEO-NPCH 1:0.75 | 352.2±1.95 | 0.51±0.06 | +27.3±0.8 | 24.7 | 10.8 |
| GEO-NPCH 1:1 | 253.4±18.58 | 0.75±0.05 | +19.8±0.25 | 23.8 | 19.4 |
| *mean ± SEM of at least three independent trials | | | | | |

*8. Chemical structure of GEO-chitosan nanoparticles*

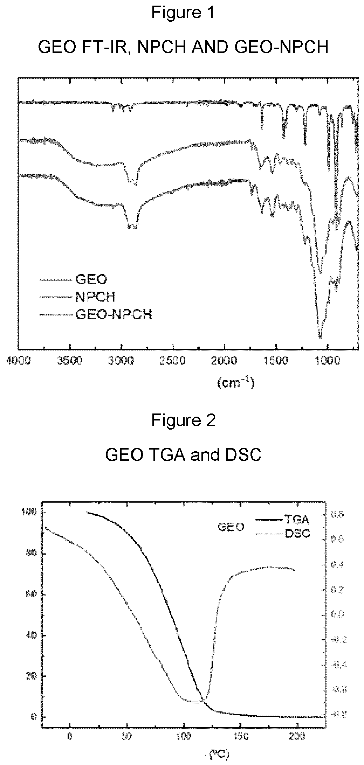

The chemical composition was determined using the FT-IR technique. The FT-IR spectra of GEO, NPCH and GEO-NPCH are shown in Figure 1. The spectra of NPCH and GEO-NPCH are very similar, as their content is mainly chitosan. A wide band between 3,750 $cm^{-1}$ and 2,500 $cm^{-1}$ is clearly observed, associated with the stretching of the O-H and N-H bonds. As shown below in thermogravimetric analysis, chitosan nanoparticles are hygroscopic and have a great tendency to absorb water. This signal includes both the structure of the O-H chitosan and the water in its different forces due to the hydrogen bonds formed. From the spectra, additional characteristic chitosan peaks at 2,916 $cm^{-1}$ and 2,864 $cm^{-1}$ are observed due to the extension of the CH bond of carbon $sp^3$, 1,634 $cm^{-1}$ due to the extension of the carbonyl C=O of the amide, 1,533 $cm^{-1}$ due to NH bending and 1,066 $cm^{-1}$ due to the stress of the different CO bonds. The GEO-NPCH sample reveals small peaks associated with the presence of GEO. At 3,082 $cm^{-1}$, a peak associated with the asymmetric tension of the CH bond for a carbon $sp^2$, 1,422 $cm^{-1}$ due to the CH deformation of the $Csp^2$-H bond and a strong peak at 1,087 $cm^{-1}$ as a consequence of the stretching of the S=O group

*9. Thermal properties of GEO-chitosan nanoparticles*

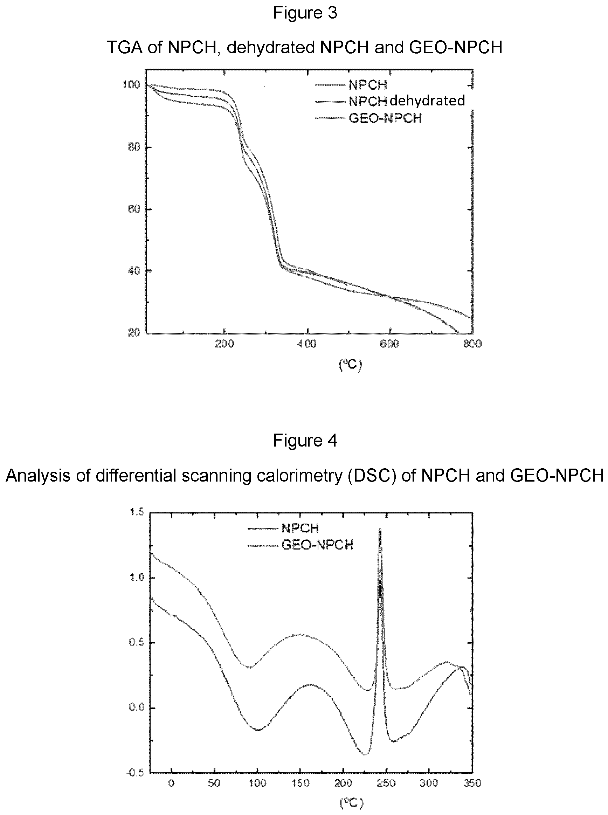

Thermogravimetric analysis/differential scanning calorimetry (TGA/DSC) was used to evaluate the absorbed material, thermal stability and decomposition temperatures of GEO, NPCH, and GEO-NPCH. GEO is an extremely volatile compound that begins to evaporate even at very low temperatures, as shown in its TGA and DSC (Figure 2). This loss of mass becomes more significant as the temperature increases, until the complete evaporation of GEO at 125°C. Figure 3 shows thermogravimetric TGA of NPCH and GEO-NPCH. NPCH shows two phases of degradation: the initial phase starting from the beginning of the experiment and ending at 100°C and the second phase starting at 170°C to 333°C. The first transition corresponds to a mass loss of 3.5% and is attributed to the loss of water vaporisation/adsorbed/bound moisture. To confirm this, NPCH was heated for 1 hour at 50°C under a nitrogen atmosphere and subsequently cooled under nitrogen until room temperature was reached. After 1 hour under nitrogen, the thermogram did not show this first water loss step (Figure 4, red line). The second stage of degradation was a weight loss of 60% and is due to the degradation of pure chitosan biopolymer. This has been previously observed for other chitosan polymers, where the amount of moisture and the range of degradation temperatures depend on the molecular weight of the chitosan polymer (Szymanska & Winnicka, 2015). These same transitions are observed in the GEO-NPCH thermogram (Figure 3, blue line), coinciding in the temperature ranges. In the second transition, mass loss was 58%, coinciding with the degree of NPCH decomposition. However, in the first transition, the mass loss is greater, reaching 7% and, although the water absorbed by both particles may differ, this may indicate that this 7% loss could correspond not only to water loss but also to the loss of GEO. This data was confirmed by DSC of NPCH and GEO-NPCH as shown in Figure 4. Similarly, for TGA, two transitions are observed in both compounds. An endothermic transition between -25°C and 100°C, and a second, more complex transition, between 170°C and 300°C, combining endothermic and exothermic processes, typical of the decomposition of the chitosan polymer. For the first transition, there is a considerable difference between the NPCH and GEO-NPCH evaporation enthalpies. For NPCH, an enthalpy of 145 J/g has been determined while GEO-NPCH shows a higher value, reaching 185 J/g, indicating that GEO-charged nanoparticles need more energy to evaporate both water and GEO. Encapsulated GEO was decomposed at a higher temperature than free GEO, reflecting the improved thermal stability of the GEO by encapsulation in chitosan nanoparticles.

*10. Crystallinity of GEO-chitosan nanoparticles*

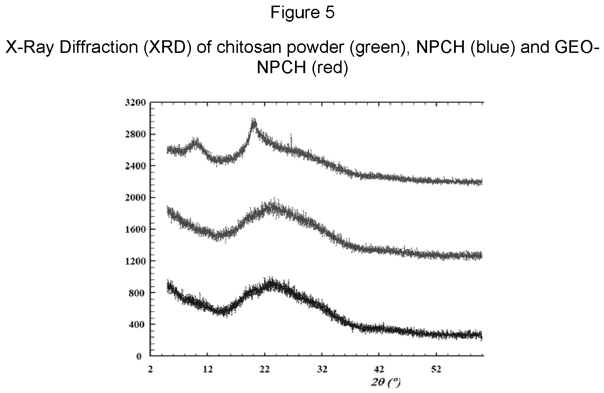

The crystallographic structure of chitosan powder, NPCH and GEO-NPCH with a CH:GEO ratio of 1:0.75 was determined by XRD and is presented in Figure 5. Chitosan powder exhibits a peak marked at 2θ around 22° showing a high degree of crystallinity (Hosseini et al., 2013). NPCH XRD patterns revealed a broad peak caused by the crosslinking reaction between chitosan and TPP, resulting in the formation of an amorphous structure. This reflects the destruction of the native chitosan packaging structure as described in other studies of chitosan NP XDR patterns. Contrary to the study carried out by Hosseini et al., on the encapsulation of oregano essential oil (OEO), where the incorporation of OEO resulted in a change in the packaging structure of chitosan-TPP, the inclusion of GEO in chitosan NP did not result in changes in its crystallinity compared with NPCH.

*11. Effects of GEO-NPCH on coated seeds*

To estimate the effect of GEO-NPCH on different seed types, a batch of 100 seeds of wheat, oats and barley was evaluated, determining the germination rate after 7 and 15 days of treatment using GEO-NPCH, Tebuconazole (TB) and untreated seeds as control (Table 2). At 7 days, the highest germination rate was observed in barley, where all treatments reached values close to 99% germination, as was the case with untreated seeds. In oats, GEO-NPCH showed a higher germination rate, reaching 99.7% compared to TB, where the effect on germination was as in untreated seeds. On the other hand, untreated wheat seeds showed a germination rate of 82%. TB and GEO-NPCH achieved higher germination rates with 93.0% and 90.3% respectively.

Table 2

| Barley Treatment | Germination % | Wheat Treatment | Germination % | Oats Treatment | Germination % |
|---|---|---|---|---|---|
| NT | 98.7±0.58 | NT | 82.0±1.15 | NT | 95.3±0.58 |
| NPCH | 98.3±0.58 | NPCH | 87.7±1.52 | NPCH | 98.7±0.58 |
| GEO-NPCH | 98.3±0.58 | GEO-NPCH | 90.3±1.53 | GEO-NPCH | 99.7±0.58 |
| TB | 98.7±0.58 | TB | 93.0±5.20 | TB | 95.3±0.58 |

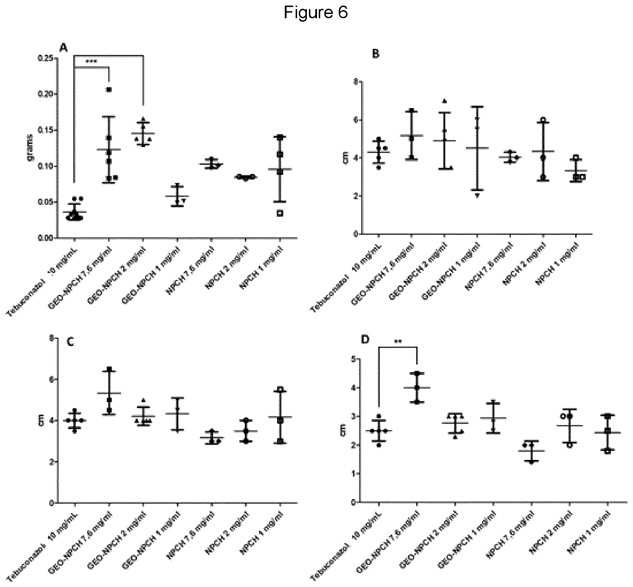

In contrast, the seed lot evaluated at 15 days (Fig. 6) showed different morphological changes according to the treatment used. The seeds treated with TB consumed all energy resources, as in other species such as maize where conventional TB treatments produce reductions in bud height, fresh bud weight and fresh root, signalling that suppression of the tebuconazole-induced maize emergence was exponentially dose-dependent. In addition, the data in Fig. 6 showed that GEO-NPCH at 7.6 mg/ml and 2 mg/ml doses have a significantly higher total weight ($p < 0.05$) than TB seeds at 10 mg/ml of pure TB. NPCH treatments also achieved a more significant increase ($p < 0.05$) in total weight than TB seeds. Root length was significantly increased ($p < 0.05$) by treatment with GEO-NPCH compared to untreated control, TB and NPCH.

*12. Antifungal properties of GEO-NPCH*

The selected dose used to perform this experiment was the same as that used in the evaluation of seed germination (Example 11). For antifungal activities, the minimum inhibitory concentration (MIC) value of NPCH was 10 mg/ml against *F. oxysposum,* while the remaining fungi showed no total inhibition at this concentration. However, GEO-NPCH was more effective against *F. oxysporum* (2.5 mg/ml) followed by *A. niger* and *A. versicolor* (5 mg/ml). GEO treatment was most effective against *A. versicolor* (5 mg/ml), followed by *F. oxysporum* (7.5 mg/ml) and *A. niger* (10 mg/ml). TB was most effective against the genus Aspergillus, being more effective against *A. niger* (0.25 mg/ml of pure TB) than *A. versicolor* (0.5 mg/ml). The MIC of TB against *F. oxysporum* was the same as GEO-NPCH (2.5 mg/ml).

Although there were no MIC values (> 10 mg/ml) against *A. versicolor* with any of the treatments, including TB, significant inhibition was observed when treated with GEO-NPCH at 10 mg/ml. The effect of the different treatments on the growth of the mycelium is shown in Table 3. All treatments showed the same pattern except *A. versicolor,* which was resistant to all treatments including TB. *A. niger was* the most susceptible fungus with MIC values ranging from 0.11 mg/ml to 1.11 mg/ml for TB and NPCH, respectively. The MIC values obtained from GEO-NPCH and TB treatment were almost similar and showed low MIC values *for A. niger* and high MIC values for *A. versicolor.*

Table 3

| Fungus | NPCH | GEO-NPCH | GEO | TB |
|---|---|---|---|---|
| *F. oxysporum* | 3.33 | 1.11 | 1.66 | >3 |
| *A. niger* | 1.111 | 0.37 | 0.56 | 0.11 |
| *A. versicolor* | >3.33 | 3.33 | 15 | 3 |

**Claims**

1. Chitosan nanoparticles containing encapsulated garlic essential oil for use as an antifungal active substance in plants and/or as an elicitor to improve the resistance of plants against fungal attack, **characterised by** its application as a coating of seeds.

2. Chitosan nanoparticles containing encapsulated garlic essential oil for use according to claim 1, wherein the concentration of nanoparticles in solution is 2.0-2.5 g/l.

3. Chitosan nanoparticles containing encapsulated garlic essential oil for use according to claim 1, wherein the chitosan is a low molecular weight chitosan of 50-190 kDa, with a degree of deacetylation of 75-85%.

4. Chitosan nanoparticles containing encapsulated garlic essential oil for use according to claim 1, wherein the ratio chitosan:essential garlic oil present in the nanoparticles is in the range 1:0.25 to 1:1.

5. Chitosan nanoparticles containing encapsulated garlic essential oil for use according to claim 4, wherein the concentration of nanoparticles in solution is 1:0.25 to 1:0.75.

Figure 1

GEO FT-IR, NPCH AND GEO-NPCH

Figure 2

GEO TGA and DSC

Figure 3

TGA of NPCH, dehydrated NPCH and GEO-NPCH

Figure 4

Analysis of differential scanning calorimetry (DSC) of NPCH and GEO-NPCH

Figure 5

X-Ray Diffraction (XRD) of chitosan powder (green), NPCH (blue) and GEO-NPCH (red)

Figure 6

Europäisches
Patentamt

European
Patent Office

Office européen
des brevets

# EUROPEAN SEARCH REPORT

Application Number

EP 22 38 2784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KASHYAP PREM LAL ET AL: "Chitosan nanoparticle based delivery systems for sustainable agriculture", INTERNATIONAL JOURNAL OF BIOLOGICAL MACROMOLECULES, ELSEVIER BV, NL, vol. 77, 5 March 2015 (2015-03-05), pages 36-51, XP029232317, ISSN: 0141-8130, DOI: 10.1016/J.IJBIOMAC.2015.02.039 * abstract * * "1.1 Chitosan in crop production and crop protection"; page 34 – page 41 * * "1.2 Chitosan as a promising delivery system"; page 41 * | 1-5 | INV. A01N65/40 A01P3/00 A01N25/28 |
| Y,D | BENKEBLIA N.: "Antimicrobial activity of essential oil extracts of various onions (Allium cepa) and garlic (Allium sativum)", LWT- FOOD SCIENCE AND TECHNOLOGY, vol. 37, no. 2, 23 October 2003 (2003-10-23), pages 263-268, XP055958373, United Kingdom ISSN: 0023-6438, DOI: 10.1016/j.lwt.2003.09.001 * abstract * * "3.2 Antifungal activity of EO extracts"; page 265 – page 267; figures 1-3 * | 1-5 | |
| | ----- | | TECHNICAL FIELDS SEARCHED (IPC) |
| | -/-- | | A01P A01N |

The present search report has been drawn up for all claims

| Place of search | Date of completion of the search | Examiner |
|---|---|---|
| Munich | 11 January 2023 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 22 38 2784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YIN MEI-CHIN ET AL: "INHIBITORY EFFECT OF SEVENALLIUM PLANTS UPON THREE ASPERGILLUS SPECIES", INTERNATIONAL JOURNAL OF FOOD MICROBIOLOGY, ELSEVIER BV, NL, vol. 49, 1 January 1999 (1999-01-01), pages 49-56, XP008070304, ISSN: 0168-1605, DOI: 10.1016/S0168-1605(99)00061-6 * abstract * | 1-5 | |
| Y | MUY-RANGEL MARÍA DOLORES ET AL: "Actividad antifúngica in vitro del aceite esencial de ajo (Allium sativum L.) contra Alternaria tenuissima", REVISTA MEXICANA DE FITOPATOLOGÍA, MEXICAN JOURNAL OF PHYTOPATHOLOGY, vol. 36, no. 1, 6 December 2017 (2017-12-06), XP093013074, DOI: 10.18781/R.MEX.FIT.1708-3 Retrieved from the Internet: URL:http://www.rmf.smf.org.mx/ojs/index.php/RMF/article/viewFile/91/88> * abstract * | 1-5 | |
| Y | MUAZU S. A. ET AL: "Antifungal Activity of Garlic (Allium sativum) Essential Oil and Wood Ash against Post-harvest Fruit Rot of Banana (Musa acuminata L.) in Yola, Adamawa State, Nigeria", INTERNATIONAL JOURNAL OF PLANT & SOIL SCIENCE, vol. 24, no. 6, 23 October 2018 (2018-10-23), pages 1-10, XP093013094, DOI: 10.9734/IJPSS/2018/29614 * abstract * | 1-5 | TECHNICAL FIELDS SEARCHED (IPC) |

-/--

The present search report has been drawn up for all claims

| Place of search | Date of completion of the search | Examiner |
|---|---|---|
| Munich | 11 January 2023 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 147 577 A1

Europäisches Patentamt
European Patent Office
Office européen des brevets

## EUROPEAN SEARCH REPORT

Application Number

EP 22 38 2784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG YAOCHEN ET AL: "The Antifungal Effect of Garlic Essential Oil on Phytophthora nicotianae and the Inhibitory Component Involved", BIOMOLECULES, vol. 9, no. 10, 21 October 2019 (2019-10-21), page 632, XP093013113, DOI: 10.3390/biom9100632 * abstract * | 1-5 | |
| Y | BOCATE KARLA PAIVA ET AL: "Garlic essential oil as an antifungal and anti-mycotoxin agent in stored corn", LWT- FOOD SCIENCE AND TECHNOLOGY, vol. 147, 1 July 2021 (2021-07-01), page 111600, XP093013122, United Kingdom ISSN: 0023-6438, DOI: 10.1016/j.lwt.2021.111600 * abstract * | 1-5 | |
| Y | Vargas-Ortiz Manuel Alejandro ET AL: "Short note [Nota corta] GARLIC (Allium sativum L.) ESSENTIAL OIL AGAINST GROWTH AND AFLATOXIN PRODUCTION OF Aspergillus parasiticus", Tropical and Subtropical Agroecosystems, 1 January 2020 (2020-01-01), page 32, XP093013128, Retrieved from the Internet: URL:https://www.revista.ccba.uady.mx/ojs/index.php/TSA/article/view/3150/1409 [retrieved on 2023-01-11] * abstract * | 1-5 | **TECHNICAL FIELDS SEARCHED (IPC)** |

-/--

The present search report has been drawn up for all claims

| Place of search | Date of completion of the search | Examiner |
|---|---|---|
| Munich | 11 January 2023 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

Europäisches
Patentamt

European
Patent Office

Office européen
des brevets

**EUROPEAN SEARCH REPORT**

Application Number

EP 22 38 2784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | HASHEMINEJAD NAYERESADAT ET AL: "Improving the antifungal activity of clove essential oil encapsulated by chitosan nanoparticles", FOOD CHEMISTRY, ELSEVIER LTD, NL, vol. 275, 14 September 2018 (2018-09-14), pages 113-122, XP085515100, ISSN: 0308-8146, DOI: 10.1016/J.FOODCHEM.2018.09.085 * abstract * | 1-5 | |
| A | LUQUE-ALCARAZ ANA GUADALUPE ET AL: "Enhanced Antifungal Effect of Chitosan/Pepper Tree ( Schinus molle ) Essential Oil Bionanocomposites on the Viability of Aspergillus parasiticus Spores", JOURNAL OF NANOMATERIALS, vol. 2016, 16 February 2016 (2016-02-16), pages 1-10, XP055950627, US ISSN: 1687-4110, DOI: 10.1155/2016/6060137 Retrieved from the Internet: URL:https://downloads.hindawi.com/journals/jnm/2016/6060137.pdf> | 1-5 | |
| A,D | HADIDI MILAD ET AL: "Chitosan nanoparticles loaded with clove essential oil: Characterization, antioxidant and antibacterial activities", CARBOHYDRATE POLYMERS, APPLIED SCIENCE PUBLISHERS , LTD BARKING, GB, vol. 236, 26 February 2020 (2020-02-26), XP086086260, ISSN: 0144-8617, DOI: 10.1016/J.CARBPOL.2020.116075 [retrieved on 2020-02-26] * abstract * | 1-5 | TECHNICAL FIELDS SEARCHED (IPC) |

-/--

The present search report has been drawn up for all claims

| Place of search | Date of completion of the search | Examiner |
|---|---|---|
| Munich | 11 January 2023 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................

& : member of the same patent family, corresponding document

EPO FORM 1503 03.82 (P04C01)

**EP 4 147 577 A1**

Europäisches Patentamt
European Patent Office
Office européen des brevets

# EUROPEAN SEARCH REPORT

Application Number

EP 22 38 2784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG FENG-LIAN ET AL: "Structural Characterization of Nanoparticles Loaded with Garlic Essential Oil and Their Insecticidal Activity against Tribolium castaneum (Herbst) (Coleoptera: Tenebrionidae)", JOURNAL OF AGRICULTURAL AND FOOD CHEMISTRY, vol. 57, no. 21, 11 November 2009 (2009-11-11), pages 10156-10162, XP093013139, US ISSN: 0021-8561, DOI: 10.1021/jf9023118 * abstract * | 1-5 | |

----

TECHNICAL FIELDS
SEARCHED      (IPC)

The present search report has been drawn up for all claims

| Place of search | Date of completion of the search | Examiner |
|---|---|---|
| Munich | 11 January 2023 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1332676 B1
- CN 103626598 B

### Non-patent literature cited in the description

- **BRAUER et al.** Antifungals in agriculture: Friends and foes of public health. *Biomolecules,* 2019, vol. 9 (10), 1-21, https://doi.org/10.3390/biom9100521
- **MARIN et al.** Potential effects of environmental conditions on the efficiency of the antifungal tebuconazole controlling Fusarium verticillioides and Fusarium proliferatum growth rate and fumonisin biosynthesis. *International Journal of Food Microbiology,* 2013, vol. 165 (3), 251-258
- **LOPEZ-ANTIA A ; ORTIZ-SANTALIESTRA ME ; MOUGEOT F ; CAMARERO PR ; MATEO R.** Birds feeding on tebuconazole treated seeds have reduced breeding output. *Environ Pollut.,* 17 December 2020, vol. 271, 116292
- **D'AGOSTINO et al.** Essential oils and their natural active compounds presenting antifungal properties. *Molecules,* 2019, vol. 24 (20
- **VALDIVIESO-UGARTE et al.** Antimicrobial, antioxidant, and immunomodulatory properties of essential oils: A systematic review. *Nutrients,* 2019, vol. 11 (11), 1-29
- **MAHIZAN et al.** Terpene derivatives as a potential agent against antimicrobial resistance (AMR) pathogens. *Molecules,* 2019, vol. 24 (14), 1-21
- **THUY et al.** Investigation into SARS-CoV-2 Resistance of Compounds in Garlic Essential Oil. *ACS Omega,* 2020, vol. 5 (14), 8312-8320
- **BENKEBLIA.** Antimicrobial activity of essential oil extracts of various onions (Allium cepa) and garlic (Allium sativum). *LWT - Food Science and Technology,* 2004, vol. 37 (2), 263-268
- **SOMRANI et al.** Garlic, onion, and cinnamon essential oil anti-biofilms' effect against Listeria monocytogenes. *Foods,* 2020, vol. 9 (5), 1-12
- **NIZA et al.** PEI-coated PLA nanoparticles to enhance the antimicrobial activity of carvacrol. *Food Chemistry,* 2020, 328
- **VAHEDIKIA et al.** Colloids and Surfaces B: Biointerfaces Biodegradable zein film composites reinforced with chitosan nanoparticles and cinnamon essential oil: Physical, mechanical, structural and antimicrobial attributes. *Colloids and Surfaces B: Biointerfaces,* December 2018, vol. 177, 25-32

- **HASHEMINEJAD et al.** Improving the antifungal activity of clove essential oil encapsulated by chitosan nanoparticles. *Food Chemistry,* August 2018, vol. 275, 113-122
- **SEBAALY et al.** Preparation and characterization of clove essential oil-loaded liposomes. *FOOD CHEMISTRY,* 2015, vol. 178, 52-62
- **NOORI et al.** Antimicrobial and antioxidant efficiency of nanoemulsion-based edible coating containing ginger (Zingiber officinale) essential oil and its effect on safety and quality attributes of chicken breast fillets. *Food Control,* 2018, vol. 84, 312-320
- **BAZZAZ et al.** Solid lipid nanoparticles carrying Eugenia caryophyllata essential oil: the novel nanoparticulate systems with broad-spectrum antimicrobial activity. *Letters in Applied Microbiology,* 2018, vol. 66, 506-513
- **HOSSEINNEJAD ; MAHDI.** International Journal of Biological Macromolecules Evaluation of different factors affecting antimicrobial properties of chitosan. *International Journal of Biological Macromolecules,* 2016, vol. 85, 467-475
- **MUZZARELLI et al.** International Journal of Biological Macromolecules Evaluation of different factors affecting antimicrobial properties of chitosan. *International Journal of Biological Macromolecules,* 2001, vol. 85, 467-475
- **HADRAMI et al.** Chitosan in Plant Protection. *Marine Drugs,* 2010, vol. 8, 968-987
- **BITTELLI et al.** Reduction of transpiration through foliar application of chitosan. *Agricultural and Forest Metereology,* 2001, vol. 107, 167-175
- **RABEA et al.** Chitosan as Antimicrobial Agent: Applications and Mode of Action. *Biomacromolecules,* 2003, vol. 4 (6), 1457-1465
- **KANANONT et al.** cientia Horticulturae Chitosan specificity for the in vitro seed germination of two Dendrobium orchids (Asparagales: Orchidaceae). *Scientia Horticultae,* 2010, vol. 124 (2), 239-247
- **KEAWCHAOON ; YOKSAN.** Colloids and Surfaces B: Biointerfaces Preparation, characterization and in vitro release study of carvacrol-loaded chitosan nanoparticles. *Colloids and Surfaces B: Biointerfaces,* 2011, vol. 84 (1), 163-171

- **HU ; LUO.** Polyphenol-chitosan conjugates: Synthesis, characterization, and applications. *Carbohydrate Polymers,* 2016, vol. 151, 624-639
- **HADIDI et al.** Chitosan nanoparticles loaded with clove essential oil: Characterization, antioxidant and antibacterial activities. *Carbohydrate Polymers,* February 2020, vol. 236, 116075
- **FAKHREDDIN et al.** Two-step method for encapsulation of oregano essential oil in chitosan nanoparticles: Preparation, characterization and in vitro release study. *Carbohydrate Polymers,* 2013, vol. 95 (1), 50-56
- **WORANUCH ; YOKSAN.** Eugenol-loaded chitosan nanoparticles: I. Thermal stability improvement of eugenol through encapsulation. *Carbohydrate Polymers,* 2013, vol. 96 (2), 578-585
- **CHUN ; CHANDRASEKARAN.** Chitosan and chitosan nanoparticles induced expression of pathogenesis-related proteins genes enhances biotic stress tolerance in tomato. *International Journal of Biological Macromolecules,* 2019, vol. 125, 948-954
- **VARSHA BHALERAO ; ASHOK CHAVAN.** Isolation of filamentous fungi in post-harvest cereal grain during the storage and their effect in seed health. *International Journal of Advanced Research,* 2008, vol. 5 (8), 2171-2177
- **PALMERO et al.** Pathogenicity and genetic diversity of Fusarium oxysporum isolates from corms of Crocus sativus. *Industrial Crops & Products,* 2014, vol. 61, 186-192
- **GARDES et al.** ITS primers with enhanced specificity for basidiomycetes - application to the identification of mycorrhizae and rusts. *Molecular Ecology,* 1993, 113-118
- **RUBIO-MORAGA et al.** Pathogenicity and genetic diversity of Fusarium oxysporum isolates from corms of Crocus sativus. *Industrial Crops & Products,* 2014, vol. 61, 186-192